# EUROPÄISCHE PATENTSCHRIFT

(11) **EP 4 343 138 B1**
(45) Veröffentlichungstag und Bekanntmachung des Hinweises auf die Patenterteilung: **18.06.2025**
(21) Anmeldenummer: 22197690.5
(22) Anmeldetag: 26.09.2022
(51) Int. Cl.: F02K 9/42, F02K 9/48, F02K 9/88, F02K 9/94, B64G 1/40

(54) **RAKETENANTRIEB, VERFAHREN SOWIE RAUMFAHRZEUG**
ROCKET PROPULSION, METHOD AND SPACECRAFT
PROPULSEUR DE FUSÉE, PROCÉDÉ ET ENGIN SPATIAL

(43) Veröffentlichungstag der Anmeldung: 27.03.2024
(73) Patentinhaber: ArianeGroup GmbH, 82024 Taufkirchen (DE)
(72) Erfinder: Hessel, Christian, 28199 Bremen (DE)
(74) Vertreter: Marschall, Stefan

(56) Entgegenhaltungen:
- CN-A- 103 982 332
- CN-U- 212 296 654
- GB-A- 1 605 195
- GB-A- 793 689
- US-A- 3 286 954

## Beschreibung

Die Erfindung betrifft zunächst einen Raketenantrieb umfassend einen ersten Tank und einen zweiten Tank, wobei der erste Tank mit einem Brennstoff und der zweite Tank mit einem Oxidator, wie flüssigem Wasserstoffperoxid, zum Speisen mindestens eines vorzugsweise wiederholt zündbaren Haupttriebwerks des Raketenantriebs befüllt ist.

Fernerkundung oder Wiederverwendung sind große Herausforderungen für autonome Antriebssysteme von Raketen und Raumfahrzeugen. Im Fall von Langzeitmissionen sind kryogene Raumfahrzeuge nicht immer die erste Wahl, da es großer Anstrengungen bedarf, die kryogenen Flüssigkeiten auch flüssig zu halten (so genannte "Boil-off"-Problematik), um eine relativ hohe Dichte und damit kleine Treibmittelbehälter zu gewährleisten. Klassische, lagerfähige Treibstoffe sind für Fernerkundung bzw. lange Operationszeiten im Orbit (Satelliten) aus dem Stand der Technik bekannt. Vielfach kommen toxische Treibstoffe wie NTO (= Distickstofftetroxid) oder MMH (= Monomethylhydrazin) für Raketenstufen oder Satelliten zum Einsatz. Diese Treibstoffe haben den Nachteil, dass sie zum einen aufgrund nationaler Regularien nicht mehr umweltkonform sind. Daneben bestehen Nachteile bei der Fernerkundung von Mond und erdnahen Planeten, wie zum Beispiel dem Mars, wenn wiederverwendbare oder rückführende Systeme in Betracht gezogen werden. Bei derartigen wiederverwendbaren bzw. rückführenden Systemen ist die Möglichkeit, die für den Rückflug erforderlichen Treibmittel- und Arbeitsgase vor Ort zu erzeugen von wesentlicher Bedeutung. NTO und MMH als Vertreter dieser konventionellen Treibstofftypen sind auf dem Mars oder dem Mond jedoch nur bedingt mit hohem Aufwand oder gar nicht synthetisierbar. Auch klassische Hochleistungshochdruckgase wie Helium sind dort nur unter erschwerten Bedingungen zugänglich und schon auf der Erde immer knapper verfügbar.

Druckschriftlicher Stand der Technik ist bekannt aus der US 3 286 954 A.

Aufgabe der Erfindung ist es unter anderem, einen autogenen Raketenantrieb anzugeben, der mit umweltverträglichen Treibmitteln arbeitet und die speziellen Eigenschaften von Wasserstoffperoxid für weitere Zusatzfunktionen des Raketenantriebs nutzt. Eine weitere Aufgabe der Erfindung ist es, ein Verfahren zum Betrieb eines solchen Raketenantriebs sowie ein mit einem solchen Raketenantrieb ausgestattetes Raumfahrzeug anzugeben.

Die eingangs genannte Aufgabe wird zunächst dadurch gelöst, dass dem Raketenantrieb ein Gasgenerator zugeordnet ist, der dazu ausgebildet ist dampfförmiges Wasserstoffperoxid zu erzeugen, das nach dem Durchströmen mindestens einer Turbine zumindest teilweise einer Separatoreinheit zuführbar ist, die dazu ausgebildet ist dampfförmiges Wasserstoffperoxid in Wasserdampf und gasförmigen Sauerstoff zu zerlegen.

Hierdurch ist der Raketenantrieb mit umweltverträglichen Treibmitteln betreibbar, die auch unter schwierigen Umweltbedingungen, wie sie zum Beispiel auf dem Mond oder erdnahen Planeten wie dem Mars herrschen, mit relativ geringem Aufwand synthetisierbar sind. Darüber hinaus ist eine Wiederverwendbarkeit von mit dem erfindungsgemäßen Raketenantrieb ausgestatteten Raumfahrzeugen, Raketenstufen, Satelliten oder dergleichen aufgrund des ungiftigen Oxidators gewährleistet. Hierdurch lassen sich gegebenenfalls auch zurückkehrende und wiederverwendbare Raumeinheiten realisieren. Das zunächst flüssige Wasserstoffperoxid wird in dem Gasgenerator katalytisch in dampfförmiges Wasserstoffperoxid bzw. ein so genanntes "Arbeitsgasgemisch" überführt, das zumindest teilweise in der Separatoreinheit in Wasserdampf bzw. Wasser und Sauerstoff aufgespalten wird. Die dem Gasgenerator nachgeschaltete Separatoreinheit kann das Arbeitsgasgemisch hierbei elektrothermisch oder fluidisch-dynamisch mit Hilfe der Zentrifugalkraft trennen. Aufgrund der Nutzung dieser Zersetzungsprodukte des Wasserstoffperoxids ist ein optimierter Betrieb des autogenen Raketenantriebs und seiner Sub- bzw. Nebensysteme realisierbar. Beispielsweise kann die Bedrückung der Tanks mit Sauerstoff und/oder mit Wasserdampf erfolgen, wodurch ein konventionelles Inertgassystem zur Tankbedrückung ganz oder zumindest teilweise entbehrlich wird. Aufgrund der Tankbedrückung ist eine zuverlässige wiederholte Zündbarkeit des Haupttriebwerks gewährleistet.

Im Fall einer vorteilhaften Ausgestaltung ist mittels des Gasgenerators mindestens ein Lageregeltriebwerk mit dampfförmigem Wasserstoffperoxid versorgbar. Hierdurch ist eine separate Speisung der Lageregeltriebwerke entbehrlich. Die Turbine kann einen Überbrückungszweig bzw. einen "Bypass" aufweisen, der unter anderem dazu ausgebildet ist, einen die Turbine durchströmenden Volumenstrom des gasförmigen Wasserstoffperoxids zu beeinflussen, das heißt insbesondere zu erhöhen oder zu verringern.

Bevorzugt ist mittels der mindestens einen Turbine ein elektrischer Generator und/oder mindestens eine Brennstoffpumpe und/oder eine Oxidatorpumpe antreibbar. Infolgedessen steht ein elektrischer Generator zur Verfügung, der zum Bespiel zur Versorgung des Raketenantriebs und dessen Subsysteme und/oder des ganzen Raumfahrzeugs mit elektrischer Energie dienen kann. Mittels des elektrischen Generators kann beispielsweise auch eine optionale Elektrolyseeinheit mit der notwendigen elektrischen Energie versorgt werden. Die Turbine kann die Separatoreinheit im Fall einer fluidisch-dynamischen Arbeitsweise der Separatoreinheit auch direkt mechanisch drehend antreiben, während bei einer thermischen Funktionsweise der vom elektrischen Generator erzeugte Strom zum Betrieb der Separatoreinheit notwendig ist. Weiterhin ist es möglich, eine Brennstoff- und/oder Oxidatorpumpe elektrisch oder direkt mechanisch-drehend mittels der Turbine anzutreiben.

Mittels eines Wasserdampfstrangs der Separatoreinheit ist der erste Tank und mittels eines Oxidatorstrangs der Separatoreinheit der zweite Tank bedrückbar. Hierdurch ist eine einfache Bedrückung der Tanks mit Zersetzungsprodukten des Wasserstoffperoxids, also des ohnehin vorhandenen Oxidators möglich. Der Begriff "Strang" definiert im Kontext der vorliegenden Beschreibung eine Rohrleitung oder auch mehrere Rohrleitungen, deren Anordnung im Fall mehrerer Leitungen der Topologie eines Kabel- bzw. Leitungsbaums ähneln kann, wobei jeder Strang bzw. jede Leitung die gleichen chemischen Stoffe wie H₂, O₂, H₂O₂, Brennstoff etc. führt und wobei diese in unterschiedlichen Aggregatzuständen vorliegen können.

Im Fall einer zweiten weiteren Ausführungsform weist der Raketenantrieb mindestens einen Behälter mit einem Inertgas zur zumindest ergänzenden Bedrückung des ersten und/oder zweiten Tanks auf. Infolgedessen ist eine von den Zersetzungsprodukten des Wasserstoffperoxids unabhängige Bedrückung der Tanks möglich.

Alternativ ist mittels eines Oxidatorstrangs der Separatoreinheit der zweite Tank bedrückbar und eine Elektrolyseeinheit ist mittels eines Wasserdampfstrangs mit der Separatoreinheit verbunden und die Elektrolyseeinheit weist einen hochenergetischen Wasserstoff- und Sauerstoffstrang auf. Aufgrund der Elektrolyseeinheit, die vorzugsweise im Hochtemperatur- und Hochdruckbetrieb arbeitet, ist zusätzlich die Gewinnung von Wasserstoff und Sauerstoff aus dem mit Hilfe der Separatoreinheit abgetrennten Wasser bzw. Wasserdampf möglich. Der Wasserstoff und der Sauerstoff können zum Beispiel zum Versorgen eines Lageregeltriebwerks dienen, das hierdurch einen im Vergleich zur Speisung mit Wasserstoffperoxid einen deutlich höheren Schub bzw. spezifischen Impuls erzeugen kann.

Bevorzugt ist dem hochenergetischen Wasserstoffstrang ein erster Hochdruckspeicher und dem hochenergetischen Sauerstoffstrang ist ein zweiter Hochdruckspeicher zugeordnet. Infolgedessen ist eine Puffer- bzw. Speicherwirkung im Wasserstoff- und Sauerstoffstrang realisiert.

Vorzugsweise ist der erste Tank mittels des hochenergetischen Wasserstoffstrangs bedrückbar. Hierdurch entfällt eine ansonsten erforderliche, separate Bedrückung mit einem Inertgas.

Im Fall einer günstigen Weiterbildung ist vorgesehen, dass eine Hauptdüse des Haupttriebwerks mittels des ersten Hochdruckspeichers mit Wasserstoff und mittels des zweiten Hochdruckspeichers mit Sauerstoff beaufschlagbar ist. Hierdurch lässt sich im Bedarfsfall zum Beispiel eine Schuberhöhung des Haupttriebwerks, eine Schubvektorsteuerung des Haupttriebwerks zur Flugbahnänderung usw. realisieren.

Vorzugsweise sind mittels des ersten und des zweiten Hochdruckspeichers das mindestens eine Lageregeltriebwerk, mindestens eine Verteidigungseinheit und/oder eine Hochenergieeinheit versorgbar. Hierdurch kann unter anderem die Leistung der Lageregeltriebwerke im Vergleich zur Speisung mit purem Wasserstoffperoxid gesteigert werden. Darüber hinaus können eine Verteidigungseinheit, wie eine rückstoßfreie Leichtgaswaffe oder andere Hochenergieeinheiten versorgt werden. Bei der Verteidigungseinheit kann es sich auch um eine Netzharpune oder eine ähnliche Vorrichtung zum Einfangen von beispielsweise außer Kontrolle geratenen Satelliten handeln, bevor die Gefahr einer Kollision mit anderen Objekten im Orbit entsteht.

Vorzugsweise ist dem Oxidatorstrang der Separatoreinheit eine Sauerstoffspeichereinheit und dem Wasserdampfstrang der Separatoreinheit eine Wasserspeichereinheit zugeordnet. Infolgedessen steht ein Speicher zur Speisung eines Lebenserhaltungssystems des Raumfahrzeugs mit Wasser und Sauerstoff zur Verfügung.

Die eingangs genannte Aufgabe wird darüber hinaus durch ein Verfahren zum Betrieb des Raketenantriebs nach Maßgabe des Patentanspruchs 12 gelöst, wonach der Brennstoff über eine erste Hauptspeiseleitung dem Haupttriebwerk zugeführt wird und das flüssige Wasserstoffperoxid aus einer zweiten Hauptspeiseleitung des Haupttriebwerks zumindest teilweise abgezapft und dem Gasgenerator zugeführt wird. Infolgedessen kann ggfls. auch nur ein verhältnismäßig kleiner Teil des flüssigen Wasserstoffperoxids dem Gasgenerator zugeleitet werden, während der verbleibende (Haupt-)Teil des flüssigen Wasserstoffperoxids nach dem Kühlen von Hauptdüse und Brennkammer des Haupttriebwerks zur Schuberzeugung dient. Die Aufteilung des über die zweite Hauptspeiseleitung zugeführten flüssigen Wasserstoffperoxids zwischen dem Haupttriebwerk und dem Gasgenerator zur katalytischen Umwandlung des flüssigen in gas- bzw. dampfförmiges Wasserstoffperoxid kann zum Beispiel mittels eines regelbaren Verteilers (so genannter "Divider") bzw. eines regelbaren Dreiwegeventils mit entsprechenden hydraulischen Anschlüssen oder dergleichen erfolgen. Sollte das Haupttriebwerk mit einer Brennstoffkühlung arbeiten, wird ein erster Teil des Wasserstoffperoxids direkt dem Haupttriebwerk zugeführt, während der verbleibende (restliche) zweite Teil nach dem Durchlaufen der Turbine in die Brennkammer des Haupttriebwerks zurückgeführt wird. Das Verhältnis der Aufteilung zwischen dem ersten und zweiten Teil hängt hierbei vom Bedarf der Subsysteme des Raketenantriebs zur Bedrückung der Tanks und der Energiewandlung ab.

Nach Maßgabe einer Weiterbildung des Verfahrens wird das aus dem Gasgenerator austretende dampfförmige Wasserstoffperoxid zumindest teilweise der Turbine zugeführt. Hierdurch ist unter anderem eine Leistungsregelung der Turbine möglich. Der nicht der Turbine zugeführte Anteil des dampfförmigen Wasserstoffperoxids ist über eine geeignete Verteileinheit der Brennkammer des Haupttriebwerks zuführbar. Grundsätzlich wird in Abhängigkeit vom Einsatzszenario des Raketenantriebs stets nur ein Teil des Wasserstoffperoxids der Turbine zugeführt. Um die größtmögliche spezifische Leistung zu erzielen, sollte so viel Wasserstoffperoxid wie möglich dem Haupttriebwerk zugeführt bzw. nach dem Durchlaufen der Turbine in dieses mit Hilfe einer geeigneten Rückführleitung zurückgeführt werden (nicht in den Zeichnungen dargestellt). In Abhängigkeit vom Anwendungsszenario kann dieses Verhältnis variieren. Der reine Bedrückungsbedarf der Tanks kann geringer ausfallen als die benötigte Leistung der Sub- bzw. der Nebensysteme und damit der Bedarf an dem - aus der Hauptspeiseleitung des Haupttriebwerks abgezweigten bzw. abgezapften - Oxidator bzw. dem Wasserstoffperoxid. Hierbei sollte stets ein möglichst hoher Anteil des Oxidators unmittelbar zur Speisung des Haupttriebwerks herangezogen werden bzw. in dem so genannten Hauptzyklus verbleiben, um vorrangig Schub- und Impulsleistung zu erzielen.

Darüber hinaus wird die eingangs genannte Aufgabe durch ein Raumfahrzeug nach Maßgabe von Patentanspruch 14 gelöst, wonach das Raumfahrzeug mit mindestens einem Raketenantrieb nach einem der Patentansprüche 1 bis 11 ausgestattet ist. Infolgedessen lässt sich der optimierte, autogene Raketenantrieb für ein Raumfahrzeug nutzen.

Die Erfindung wird anhand von in den Figuren dargestellten Ausführungsbeispielen in der nachfolgenden Beschreibung näher erläutert. In den Figuren weisen die gleichen konstruktiven Elemente jeweils dieselben Bezugsziffern auf. Gestrichelt dargestellte Linien symbolisieren jeweils optionale Leitungen bzw. Komponenten. Es zeigt
- Figur 1: ein schematisches Schaltbild einer ersten Ausführungsform eines Raketenantriebs,
- Figur 2: ein schematisches Schaltbild einer zweiten Ausführungsform eines Raketenantriebs, und
- Figur 3: ein schematisches Schaltbild einer dritten Ausführungsform eines Raketenantriebs.

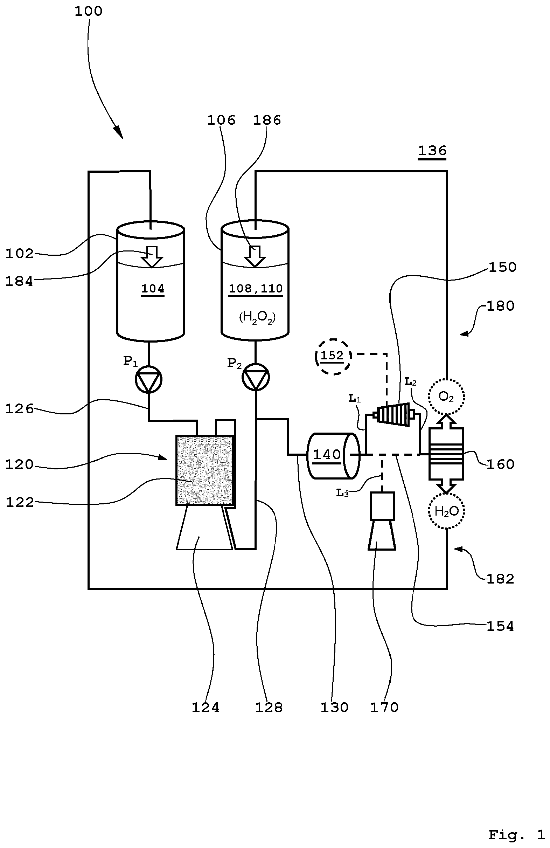

Figur 1 illustriert ein schematisches Schaltbild einer ersten Ausführungsform eines Raketenantriebs. Ein Raketenantrieb 100 umfasst unter anderem einen ersten Tank 102 für einen Brennstoff 104 und einen zweiten Tank 106 für einen Oxidator 108, bei dem es sich bevorzugterweise um Wasserstoffperoxid 110 handelt. Bei dem Brennstoff 104 handelt es sich um einen beliebigen, flüssigen sowie lagerfähigen Brennstoff, wie zum Beispiel Kerosin, der zudem wie das als Oxidator 108 eingesetzte Wasserstoffperoxid 110 eine möglichst geringe Toxizität aufweist.

Der Brennstoff 104 ist mittels einer Brennstoffpumpe P₁ über eine Hauptspeiseleitung 126 einer Brennkammer 122 mindestens eines Haupttriebwerks 120 zuführbar. Entsprechend ist der Oxidator 108 bzw. hier bevorzugterweise das Wasserstoffperoxid 110 mittels einer Oxidatorpumpe P₂ und einer zweiten Hauptspeiseleitung 128 nach dem Passieren der Hauptdüse 124 ebenfalls der Brennkammer 122 zuführbar. In der Brennkammer 122 des Haupttriebwerks 120 erfolgt nach inniger Vermischung des Brennstoffs 104 und des Oxidators 108 deren Verbrennung zur Schuberzeugung.

Mittels einer Abzweigleitung 130 ist ein Gasgenerator 140 mit der zweiten Hautspeiseleitung 128 verbunden. Der dem Gasgenerator 140 mittels der Abzweigleitung 130 zugeführte Volumenstrom an flüssigem Wasserstoffperoxid ist mittels eines in den Figuren der besseren zeichnerischen Übersicht halber nicht dargestellten, regelbaren Verteilers variierbar. Der Gasgenerator 140 ist dazu ausgebildet, auf vorzugsweise katalytischem Weg dampfförmiges Wasserstoffperoxid zu erzeugen, das mittels einer Leitung L₁ einer Turbine 150 bzw. einer Strömungsmaschine zuleitbar ist. Nach dem Durchströmen der Turbine 150 gelangt das Wasserstoffperoxid mittels einer weiteren Leitung L₂ zu einer Separatoreinheit 160.

Die Leitungen L_{1,2} sind mittels eines Überbrückungszweigs 154 zur Schaffung eines Bypasses für die Turbine 150 verbunden, wodurch der Volumenstrom des die Turbine 150 passierenden Wasserstoffperoxids mittels nicht dargestellter Ventile etc. einstellbar ist. An den optionalen Überbrückungszweig 154 ist hier lediglich exemplarisch eine gleichfalls optionale Leitung L₃ angeschlossen, die zur Speisung eines Lageregeltriebwerks 170 (s. g. "Thruster") mit dampfförmigem Wasserstoffperoxid bestimmt ist. Auch in der Leitung L₃ sind nicht dargestellte Ventile vorgesehen, um den Schub bzw. den spezifischen Impuls des Lageregeltriebwerks 170 differenziert regeln zu können.

Das der Separatoreinheit 160 über die Leitung L₂ bzw. den optionalen Überbrückungszweig 154 aus dem Gasgenerator 140 zuströmende dampfförmige Wasserstoffperoxid wird darin in Sauerstoff O₂ und Wasser bzw. Wasserdampf H₂0 aufgespalten, was mit den beiden punktierten Markierungskreisen und den darin eingetragenen chemischen Bezeichnungen O₂ bzw. H₂O zeichnerisch verdeutlicht ist. Die beiden punktierten Markierungskreise dienen lediglich zur Veranschaulichung des Umstandes, dass innerhalb eines rohr- bzw. leitungsartigen Oxidatorstrangs 180 und eines Wasserdampfstrangs 182, die jeweils mit der Separatoreinheit 160 verbunden sind, die vorstehend genannten Stoffe (O₂, dampf- bzw. gasförmiges H₂0) aus der Separatoreinheit 160 in Richtung der beiden Tanks 102, 106 zur Bedrückung derselben ableitbar sind.

Der erste Tank 102 mit dem Brennstoff 104 ist mittels des an die Separatoreinheit 160 angeschlossenen Wasserdampfstrangs 182 bevorzugt mit dem separierten Wasserdampf und der zweite, das flüssige Wasserstoffperoxid 110 enthaltende Tank 106 ist entsprechend mittels eines an die Separatoreinheit 160 angeschlossenen Oxidatorstrangs 180 mit dem separierten gasförmigen Sauerstoff bedrückbar, wie jeweils mit den beiden weißen Pfeilen 184, 186 veranschaulicht ist.

Die Turbine 150 kann einen optionalen elektrischen Generator 152 (gestrichelt dargestellt) zur Gewinnung elektrischer Energie antreiben. Die Brennstoffpumpe P₁ und die Oxidatorpumpe P₂ können direktdrehend mittels der Turbine 150 oder bei vorhandenem elektrischen Generator 152 mit Hilfe von nicht dargestellten Elektromotoren elektrisch angetrieben sein.

Die dem Gasgenerator 140 nachgeschaltete Separatoreinheit 160 kann das zugeführte dampfförmige Wasserstoffperoxid bzw. das "Arbeitsgasgemisch" hierbei elektrothermisch oder fluidisch-dynamisch mit Hilfe der Zentrifugalkraft trennen. Im Fall der elektrothermischen Funktionsweise der Separatoreinheit 160 wird die mit Hilfe des Generators 152 gewonnene elektrische Energie zum Betrieb eingesetzt. Basiert die Aufspaltung des Wasserstoffperoxids in Sauerstoff und Wasser bzw. Wasserdampf hingegen auf dem fluidisch-dynamischen Wirkprinzip unter Ausnutzung der Zentrifugalkraft, kann die Separatoreinheit 160 direkt mechanisch-drehend von der Turbine 150 angetrieben werden.

Wasserstoffperoxid 110 als hier zum Einsatz kommender Oxidator des Raketenantriebs 100 ist weitgehend umweltverträglich, nicht toxisch und zudem auch unter schwierigen Umgebungsbedingungen, wie sie auf dem Mond und erdnahen Planeten wie Mars herrschen, vergleichsweise leicht zu synthetisieren. In Verbindung mit einem ähnliche Eigenschaften aufweisenden lagerfähigen, flüssigen Brennstoff 104, kann ein mit dem Raketenantrieb 100 ausgestattetes Raumfahrzeug 136 unter Umständen auch wiederverwendet werden bzw. zur Erde zurückkehren. Darüber hinaus gestattet die Aufspaltung von Wasserstoffperoxid 110 innerhalb des Raketenantriebs 100 mittels der Separatoreinheit 160 in Sauerstoff O₂ und dampfförmigen Wasserdampf H₂O zugleich die Bedrückung des ersten und zweitens Tanks 102, 106. Daher ist bei der ersten Ausführungsform von Fig. 1 kein zusätzlicher Tank mit einem Inertgas wie Helium etc. zur Bedrückung der Tanks 102, 106 vonnöten. Bei dem Raumfahrzeug 136 kann es sich beispielsweise um eine Rakete, einen Satelliten, eine Raumkapsel, ein Raumstation oder dergleichen handeln.

Weiterhin können in allen Leitungen bzw. rohrartigen Strängen des Raketenantriebs 100 erforderlichenfalls, der besseren zeichnerischen Übersicht halber nicht dargestellte Ventile bzw. Stellorgane vorgesehen sein, die von einer gleichfalls nicht eingezeichneten elektronischen Steuer- und/oder Regeleinrichtung des Raketenantriebs 100 und/oder des Raumfahrzeugs 136 kontrollierbar sind. Dasselbe gilt für Verbindungsknoten zwischen zwei oder mehr Leitungen bzw. durch (Mehrweg-)Ventile gebildete Verbindungsknoten. Die mindestens eine elektronische Steuer- und/oder Regeleinrichtung ist hierbei dazu ausgebildet, sämtliche Abläufe bzw. Prozesse innerhalb des Raketenantriebs 100 zu kontrollieren.

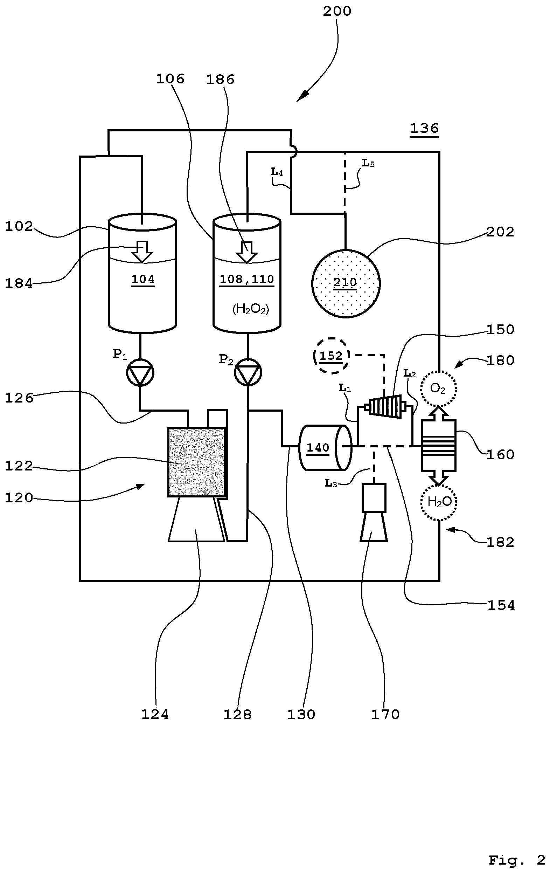

Die Fig. 2 illustriert ein schematisches Schaltbild einer zweiten Ausführungsform eines Raketenantriebs. Die zweite Ausführungsform eines Raketenantriebs 200 umfasst erneut den ersten und zweiten Tank 102, 106, wobei der erste Tank 102 mit dem Brennstoff 104 und der zweite Tank 106 mit dem Oxidator 108 in Form von flüssigem Wasserstoffperoxid 110 befüllt ist. Der Brennstoff 104 ist mittels der Brennstoffpumpe P₁ über die erste Hauptspeiseleitung 126 direkt der Brennkammer 122 des Haupttriebwerks 120 zuführbar. Entsprechend ist der Oxidator 108 mittels der Oxidatorpumpe P₂ über die zweite Hauptspeiseleitung 128 der Brennkammer 122 zuführbar, wobei der Oxidator 108 bzw. das Wasserstoffperoxid 110 vor dem Eintritt in die Brennkammer 122 diese und die Hauptdüse 124 kühlt. Innerhalb der Brennkammer 122 kommt es zur innigen Vermischung des Brennstoffs 104 und des gasförmigen Oxidators 108 sowie zu deren Verbrennung zur Impulserzeugung.

Mittels der an die zweite Hauptspeiseleitung 128 angeschlossenen Abzweigleitung 130 ist wiederum ein einstellbarer Anteil des flüssigen Wasserstoffperoxids 110 in den Gasgenerator 140 überführbar, um katalytisch gasförmiges Wasserstoffperoxid zu erzeugen. Das gasförmige Wasserstoffperoxid 110 ist mittels der Leitungen L_{1,2} der Turbine 150 zu- und abführbar und gelangt anschließend in die Separatoreinheit 160. Das von dem Gasgenerator 140 erzeugte gasförmige Wasserstoffperoxid kann teilweise oder vollständig mit Hilfe des Überbrückungszweigs 154 an der Turbine 150 vorbeigeleitet ("Bypass") und somit zumindest teilweise auch auf direktem Weg in die Separatoreinheit 160 geleitet werden. Mit Hilfe des Überbrückungszweigs 154 und der Leitung L₃ ist im Bedarfsfall noch das Lageregeltriebwerk 170 mit gasförmigem Wasserstoffperoxid versorgbar. An die Separatoreinheit 160 sind wiederum der Oxidatorstrang 180 und der Wasserdampfstrang 182 angeschlossen, die zur Bedrückung des in den Tanks 102, 106 bevorrateten Brennstoffs 104 und des Oxidators 108 dienen. Mittels der Turbine 150 ist der optionale elektrische Generator 152 zu Erzeugung elektrischer Energie antreibbar.

Als wesentlicher Unterschied zu der ersten Ausführungsform verfügt die zweite Ausführungsform des Raketenantriebs 200 über einen Behälter 202, der mit einem Inertgas 210, wie Helium, Neon, Argon etc. befüllt ist. Mittels einer Leitung L₄, die an den Wasserdampfstrang 182 angeschlossen ist, ist der erste Tank 102 mit dem Inertgas 210 bedrückbar bzw. beaufschlagbar. Weiterhin kann mittels einer optionalen Leitung L₅ auch der zweite Tank 106 mit dem Inertgas 210 beaufschlagt werden. Die zweite Leitung L₅ kann hierbei, wie in Figur 2 illustriert, von der Leitung L₄ abzweigen oder unabhängig von dieser, unmittelbar an den Behälter 202 angeschlossen sein (nicht dargestellt).

Der Vorteil der zweiten Ausführungsform des Raketenantriebs 200 ist unter anderem darin zu sehen, dass neben der Möglichkeit der Bedrückung der Tanks 102, 106 mit den Spaltprodukten (O₂, H₂O) des Wasserstoffperoxids, also der einen Treibstoffkomponente des Raketenantriebs 200, die Möglichkeit einer zumindest ergänzenden Bedrückung zumindest eines der Tanks 102, 106 mit dem Inertgas 210 aus dem Behälter 202 besteht. Die Bedrückung der Tanks 102, 106 erfolgt wiederum in Richtung der Pfeile 184, 186.

Nach Maßgabe eines Verfahrens zum Betrieb des Raketenantriebs 200 ist vorgesehen, dass der Brennstoff 104 über die erste Hauptspeiseleitung 126 dem Haupttriebwerk 120 zugeführt wird und das flüssige Wasserstoffperoxid aus der zweiten Hauptspeiseleitung 128 des Haupttriebwerks 120 zumindest teilweise abgezapft bzw. abgezweigt und dem Gasgenerator 140 zugeführt wird. Infolgedessen kann eine mechanische Leistung der Turbine 150 unter der Kontrolle der Steuer- und/oder Regeleinrichtung in weiten Grenzen variiert werden. Das aus dem katalytischen Gasgenerator 140 austretende dampfförmige Wasserstoffperoxid kann verfahrensgemäß mit Hilfe des Überbrückungszweig 154 zumindest teilweise um die Turbine 150 herumgeleitet und/oder dem Lageregeltriebwerk 170 zugeführt werden, was unter permanenter Kontrolle der Steuer- und/oder Regeleinrichtung geschieht. Dieses bedeutet, dass das aus dem Gasgenerator 140 austretende gasförmige Wasserstoffperoxid - bis auf die, dem Lageregeltriebwerk 170 zugeführten Mengen - vollständig über die Turbine 150 und/oder den Überbrückungszweig 154 bis in die Separatoreinheit 160 gelangt.

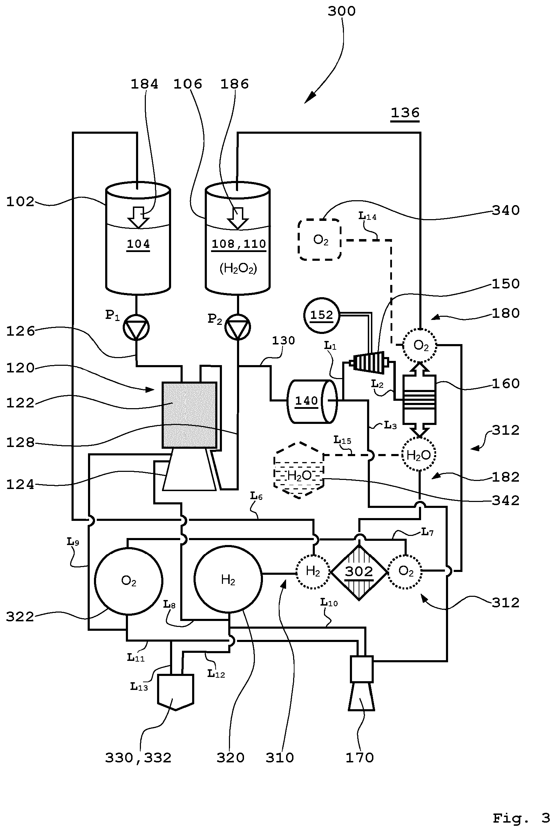

Die Fig. 3 illustriert ein schematisches Schaltbild einer dritten Ausführungsform eines Raketenantriebs. Diese Ausführungsform eines Raketenantriebs 300 umfasst wiederum die beiden Tanks 102, 106, die mit dem Brennstoff 104 sowie dem Oxidator 108 in Form von Wasserstoffperoxid 110 zumindest teilweise befüllt sind. Der Brennstoff 104 ist mittels der Brennstoffpumpe P₁ über die erste Hauptspeiseleitung 126 und der Oxidator 108 ist mittels der Oxidatorpumpe P₂ über die zweite Hauptspeiseleitung 128 in die Brennkammer 122 des Haupttriebwerks 120 förderbar, wobei die Kühlung der Hauptdüse 124 bzw. der Düsenerweiterung und der Brennkammer 122 mittels des Oxidators 108 bzw. des Wasserstoffperoxids 110 erfolgt.

Der Gasgenerator 140 ist erneut mittels der Abzweigleitung 130 mit der zweiten Hauptspeiseleitung 128 verbunden. Die Turbine 150 ist mittels der Leitung L₁ aus dem Gasgenerator 140 mit gasförmigem Wasserstoffperoxid beaufschlagbar, das nach dem Durchlaufen der Turbine 150 über die Leitung L₂ in die Separatoreinheit 160 ableitbar ist. Im Gegensatz zu den beiden ersten Ausführungsformen fehlt hier der optionale Überbrückungszweig 154 ("Bypass") der Turbine 150 nach Maßgabe der Fig. 1, 2. Mittels der Turbine 150 ist der hier obligatorische elektrische Generator 152 (mit einer durchgezogenen Linie dargestellt) zur Gewinnung elektrischer Energie antreibbar. Das Lageregeltriebwerk 170 ist unter anderem mittels der Leitung L₃ speisbar. Zwischen der Leitung L₁ und der Leitung L₃ kann mittels eines nicht dargestellten Ventils eine beliebige Volumenstromaufteilung vorgesehen sein. Der in dem zweiten Tank 106 befindliche Oxidator 108 in Form des flüssigen Wasserstoffperoxids 110 ist analog zu den Ausführungsformen von Fig. 1, 2 mit Hilfe des von der Separatoreinheit 160 ausgehenden Sauerstoffstrangs 180, wie mit dem weißen Pfeil 186 angedeutet, bedrückbar. Die punktierten Kreise im Oxidator- und Wasserdampfstrang 180, 182 der Separatoreinheit 160 dienen analog zu den Fig. 1, 2 lediglich zur Veranschaulichung der in diesen Strängen strömenden chemischen Verbindungen (O₂, dampf- bzw. gasförmiges H₂O). Der Raketenantrieb 300 ist erneut in das Raumfahrzeug 136 integriert.

Als ein wesentlicher Unterschied zu den beiden Ausführungsformen von Fig. 1, 2 verfügt die dritte Ausführungsform unter anderem über eine Elektrolyseeinheit 302 nebst zugehöriger Leitungen, die für einen Hochdruck- und/oder Hochtemperaturbetrieb ausgebildet ist. Die Elektrolyseeinheit 302 ist mittels des Wasserdampfstrangs 182 mit der Separatoreinheit 160 verbunden. Die Versorgung der Elektrolyseeinheit 302 mit der betriebsnotwendigen elektrischen Energie kann zum Beispiel mittels des von der Turbine 150 angetriebenen elektrischen Generators 152 oder einer nicht dargestellten, externen weiteren elektrischen Energiequelle erfolgen. Der Elektrolyseeinheit 302 ist ferner ein hochenergetischer Wasserstoffstrang 310 und ein hochenergetischer Sauerstoffstrang 312 zur Ableitung der durch die Elektrolyse aus dem zugeführten Wasser entstehenden Reaktionsprodukte H₂ und O₂ zugeordnet. Die beiden punktierten Kreise mit den darin enthaltenen chemischen Bezeichnungen H₂ und O₂ dienen erneut lediglich zur Verdeutlichung der in den unter Hochdruck und/oder hoher Temperatur stehenden Strängen 310, 312 von der Elektrolysezelle 302 abgeführten Stoffe. Der Sauerstoffstrang 312 der Elektrolysezelle 302 ist mit dem Oxidatorstrang 180 der Separatoreinheit 160 gekoppelt.

Als ein weiterer Unterschied ist bei der dritten Ausführungsform an den Wasserstoffstrang 310 ein erster Hochdruckspeicher 320 zur Bevorratung des von der Elektrolysezelle 302 gelieferten Wasserstoffs H₂ angeschlossen. Von dem Wasserstoffstrang 310 zweigt eine weitere Leitung L₆ ab, mittels der auch der im ersten Tank 102 bevorratete Brennstoff 104 in Richtung des weißen Pfeils 184 bedrückbar ist, so dass beide Tanks 102, 106 dauerhaft bedrückt sind und eine zuverlässige wiederholte Zündung des Haupttriebwerks 120 im Bedarfsfall gewährleistet ist. Der Sauerstoffstrang 312 der Elektrolyseeinheit 302 ist darüber hinaus mittels einer Leitung L₇ mit einem zweiten Hochdruckspeicher 322 zur Aufnahme des von der Elektrolyseeinheit 302 gelieferten Sauerstoffs O₂ verbunden.

Die beiden Hochdruckspeicher 320, 322 gestatten ferner den Betrieb einer ganzen Anzahl von nachfolgend kurz erläuterten, exemplarischen Sub- bzw. Nebensystemen des Raketenantriebs 300.

So ist an den ersten Hochdruckspeicher 320 für Wasserstoff H₂ eine weitere Leitung L₈ angeschlossen, die mit der Hauptdüse 124 des Haupttriebwerks 120 verbunden ist. Entsprechend führt eine weitere Leitung L₉ vom zweiten Hochdruckspeicher 322 für Sauerstoff O₂ zu der Hauptdüse 124 des Haupttriebwerks 120. Hierdurch lässt sich im Bedarfsfall zum Beispiel eine spezifische Impulserhöhung des Haupttriebwerks 120, eine komplexe Schubvektorsteuerung des Haupttriebwerks 120 zur Flugbahnänderung des Raumfahrzeugs 136 oder dergleichen realisieren, was mit den ersten beiden Ausführungsformen des Raketentriebwerks nach Maßgabe der Fig. 1, 2 nicht möglich ist.

Weiterhin führen zwei Leitungen L_{10,11} von den beiden Hochdruckspeichern 320, 322 zu dem Lageregeltriebwerk 170, so dass dieses mit hochenergetischem Sauerstoff O₂ und Wasserstoff H₂ betreibbar ist, was im Vergleich zu der Speisung mit gasförmigem Wasserstoffperoxid über die Leitung L₃ ausgehend von dem Gasgenerator 140 - wie bei den Ausführungsformen von Fig. 1, 2 vorgesehen - die Erzeugung wesentlich höherer spezifischer Impulse mittels des Lageregeltriebwerks 170 gestattet.

Darüber hinaus sind hier abweichend von den Ausführungsformen nach Maßgabe der Fig. 1, 2 eine Verteidigungseinheit 330 und/oder eine Hochenergieeinheit 332 mit Hilfe weiterer Leitungen L_{12,13} mit den Hochdruckspeichern 320, 322 verbunden. Bei der Verteidigungseinheit 330 kann es sich beispielsweise um eine nicht dargestellte Leichtgaskanone mit einem vorzugsweise integrierten Rückstoßausgleich zum Beschleunigen eines Projektils auf eine Austrittsgeschwindigkeit von bis zu 60 km/s handeln. Der Betrieb der Leichtgaskanone ist mittels des, in den Hochdruckspeichern 320, 322 bevorrateten Wasserstoffs H₂ und/oder des Sauerstoffs O₂ möglich. Der Wasserstoff H₂ dient als das Projektil beschleunigendes Leichtgas, während ein Gemisch aus Wasserstoff H₂ und Sauerstoff O₂ (Knallgas) als eigentliche Treibladung anstelle von Schwarzpulver etc. fungiert. Infolgedessen ist eine beträchtliche Gewichtsreduzierung im Verhältnis zum Einsatz von Schwarzpulverpatronen bei einer zugleich erhöhten Austrittsgeschwindigkeit erreichbar. Ein definierter Ausstoß des Beschleunigungsgases H₂ sorgt mittels einer geeignet positionierten Gegendüse zugleich für einen Impulsausgleich, so dass eine Position des Raumfahrzeugs 136 im Wesentlichen unverändert bleibt.

Darüber hinaus kann die Verteidigungseinheit 330 mit einem nicht dargestellten Lasersystem gebildet sein, das ebenfalls mit dem Sauerstoff O₂ und Wasserstoff H₂ aus den beiden Hochdruckspeichern 320, 322 sowie mit dem Strom des elektrischen Generators 152 versorgt werden kann.

Bei der Hochenergieeinheit 332 kann es sich weiterhin um eine beliebige andere Vorrichtung handeln, zu deren Betrieb ebenfalls unter Hochdruck stehender Wasserstoff H₂ und Sauerstoff O₂ notwendig ist.

Im Bereich von nicht bezeichneten Anschluss- bzw. Verbindungsstellen (Knoten) zwischen den Leitungen L_{8,10} L_{9,11} L_{10,12} L_{11,13} und anderer sind vorzugsweise jeweils nicht dargestellte Ventile zur Durchlasskontrolle und/oder Aufteilung der jeweiligen Stoffströme (O₂, H₂, H₂O₂, Brennstoff etc.) vorgesehen, die zudem in flüssiger und/oder gasförmiger Phase vorliegen können. Darüber hinaus können Ventile an oder in beliebigen Abschnitten der Leitungen vorgesehen sein.

Als weiterer Unterschied können optional eine Sauerstoffspeichereinheit 340 und eine Wasserspeichereinheit 342 vorgesehen sein, so dass ein nicht dargestelltes Lebenserhaltungssystem des Raumfahrzeugs 136 mit Sauerstoff O₂ und Wasser H₂0 für eine z. B. an Bord des Raumfahrzeugs 136 befindliche menschliche Besatzung dauerhaft versorgbar ist. Hierdurch sind längere Aufenthalte im Raum bzw. ggfls. auch Reisen zum Mond und/oder erdnahen Planeten wie dem Mars realisierbar. Zu diesem Zweck ist die Sauerstoffspeichereinheit 340 mittels einer weiteren Leitung L₁₄ mit dem Oxidatorstrang 180 der Separatoreinheit 160 verbunden und die Wasserspeichereinheit 342 ist über eine Leitung L₁₅ an den Wasserstrang 182 der Separatoreinheit 182 angeschlossen.

Auch die dritte Ausführungsform des Raketenantriebs 300 lässt sich mit Hilfe einer Vielzahl von der Steuer- und /oder Regeleinrichtung kontrollierten Verfahren bzw. Abläufen auf eine optimale Art und Weise betreiben bzw. nutzbringend einsetzen.

So kann beispielsweise flüssiges Wasserstoffperoxid H₂O₂ aus dem zweiten Tank 106 mittels des Gasgenerators 140 zunächst in gasförmiges Wasserstoffperoxid H₂O₂ verwandelt werden und mittels der Turbine 140 und des elektrischen Generators 150 verstromt werden.

Das aus der Turbine 150 über die Leitung L₂ austretende gasförmige Wasserstoffperoxid wird mithilfe der Separatoreinheit 160 in Sauerstoff O₂ und Wasser H₂O aufgespalten. Der Sauerstoff O₂ und das flüssige und/oder dampfförmige Wasser H₂O lassen sich dann in einer Sauerstoffspeichereinheit 340 und in einer Wasserspeichereinheit 342 längerfristig zur weiteren Verwendung bevorraten. Das aus der Separatoreinheit 160 austretende Wasser H₂O wird mittels der Elektrolyseeinheit 302 in Wasserstoff H₂ und Sauerstoff O₂ zerlegt, die getrennt voneinander dauerhaft in einen ersten Hochdruckspeicher 320 für H₂ und in einen zweiten Hochdruckspeicher 322 für O₂ zur beliebigen weiteren Verwendung eingespeichert werden.

Als Verwendungen des jeweils unter Hochdruck in den Hochdruckspeichern 320, 322 bevorrateten Wasserstoffs H₂ und des Sauerstoffs O₂ kommen zum Beispiel das Einspritzen in die Hauptdüse 124 des Haupttriebwerks 120, die Speisung des Lageregeltriebwerks 170, sowie die Versorgung der Verteidigungseinheit 330 in Form einer Leichtgaskanone bzw. der Hochenergieeinheit 332 in Betracht (Sub- bzw. Nebenantriebe).

Es versteht sich hierbei von selbst, dass eine Vielzahl weiterer Verfahren bzw. Prozesse, jeweils unter Kontrolle der nicht dargestellten elektronischen Steuer- und/oder Regeleinrichtung zum Betrieb des Raketenantriebs 300 nach Maßgabe der dritten Ausführungsform von Fig. 3 möglich sind.

Die Erfindung betrifft einen Raketenantrieb umfassend einen ersten Tank und einen zweiten Tank, wobei der erste Tank mit einem Brennstoff und der zweite Tank mit einem Oxidator, wie flüssigem Wasserstoffperoxid, zum Speisen mindestens eines vorzugsweise wiederholt zündbaren Haupttriebwerks des Raketenantriebs befüllt ist. Erfindungsgemäß ist dem Raketenantrieb ein Gasgenerator zugeordnet, der dazu ausgebildet ist dampfförmiges Wasserstoffperoxid zu erzeugen, das nach dem Durchströmen mindestens einer Turbine zumindest teilweise einer Separatoreinheit zuführbar ist, die dazu ausgebildet ist, dampfförmiges Wasserstoffperoxid in Wasserdampf und gasförmigen Sauerstoff zu zerlegen. Hierdurch ist der Raketenantrieb einschließlich all seiner Subsysteme mit Wasserstoffperoxid H₂O₂ als ein umweltverträglicher Oxidator in Verbindung mit einem flüssigen, lagerfähigen und ebenfalls eine möglichst geringe Toxizität aufweisenden Brennstoff betreibbar. Darüber hinaus hat die Erfindung ein Verfahren zum Betrieb des Raketenantriebs sowie ein Raumfahrzeug zum Gegenstand.

### Bezugszeichenliste

- 100: Raketenantrieb (1. Var.)
- 102: erster Tank
- 104: Brennstoff
- 106: zweiter Tank
- 108: Oxidator
- 110: Wasserstoffperoxid
- 120: Haupttriebwerk
- 122: Brennkammer (Haupttriebwerk)
- 124: Hauptdüse (Haupttriebwerk, Düsenerweiterung)
- 126: erste Hauptspeiseleitung (Oxidator)
- 128: zweite Hauptspeiseleitung (Brennstoff)
- 130: Abzweigleitung
- 136: Raumfahrzeug
- 140: Gasgenerator
- 150: Turbine
- 152: elektrischer Generator
- 154: Überbrückungszweig (Turbine)
- 160: Separatoreinheit
- 170: Lageregeltriebwerk
- 180: Oxidatorstrang (Separatoreinheit)
- 182: Wasserdampfstrang (Separatoreinheit)
- 184: weißer Pfeil
- 186: weißer Pfeil
- 200: Raketenantrieb (2. Var.)
- 202: Behälter (Inertgas)
- 210: Inertgas
- 300: Raketenantrieb (3. Var.)
- 302: Elektrolyseeinheit (Hochdruck/Hochtemperatur)
- 310: (hochenergetischer) Wasserstoffstrang
- 312: (hochenergetischer) Sauerstoffstrang
- 320: erster Hochdruckspeicher (Wasserstoff)
- 322: zweiter Hochdruckspeicher (Sauerstoff)
- 330: Verteidigungseinheit
- 332: Hochenergieeinheit
- 340: Sauerstoffspeichereinheit
- 342: Wasserspeichereinheit
- L₁: Leitung (Turbine)
- L₂: Leitung (Turbine)
- L₃: Leitung (Lageregeltriebwerk)
- L₄: Leitung (Bedrückung erster Tank)
- L₅: Leitung (Bedrückung zweiter Tank)
- L₆: Leitung (Bedrückung erster Tank)
- L₇: Leitung (Anbindung erster Hochdruckspeicher)
- L₈: Leitung (Hauptdüse)
- L₉: Leitung (Hauptdüse)
- L₁₀: Leitung (Lageregelungstriebwerk)
- L₁₁: Leitung (Lageregelungstriebwerk)
- L₁₂: Leitung (Verteidigungs-/Hochenergieeinheit)
- L₁₃: Leitung (Verteidigungs-/Hochenergieeinheit)
- L₁₄: Leitung (Sauerstoffspeichereinheit)
- L₁₅: Leitung (Wasserspeichereinheit)
- P₁: Brennstoffpumpe
- P₂: Oxidatorpumpe

## Patentansprüche

1. Raketenantrieb (100, 200, 300) umfassend einen ersten Tank (102) und einen zweiten Tank (106), wobei der erste Tank (102) mit einem Brennstoff (104) und der zweite Tank (106) mit einem Oxidator (108), wie flüssigem Wasserstoffperoxid (110), zum Speisen mindestens eines vorzugsweise wiederholt zündbaren Haupttriebwerks (120) des Raketenantriebs (100, 200, 300) befüllt ist, wobei dem Raketenantrieb (100, 200, 300) ein Gasgenerator (140) zugeordnet ist, der dazu ausgebildet ist dampfförmiges Wasserstoffperoxid zu erzeugen, das nach dem Durchströmen mindestens einer Turbine (150) zumindest teilweise einer Separatoreinheit (160) zuführbar ist, die dazu ausgebildet ist, dampfförmiges Wasserstoffperoxid in Wasserdampf und gasförmigen Sauerstoff zu zerlegen, **dadurch gekennzeichnet, dass** die Separatoreinheit (160) einen Oxidatorstrang (180) und einen Wasserdampfstrang (182) hat,
wobei
- mittels des Oxidatorstrangs (180) der zweite Tank (106) bedrückbar und mittels des Wasserdampfstrangs (182) der erste Tank (102) bedrückbar ist,
oder
- mittels des Wasserdampfstrangs (182) eine Elektrolyseeinheit (302) mit der Separatoreinheit (160) verbunden ist und die Elektrolyseeinheit (302) einen hochenergetischen Wasserstoff- und Sauerstoffstrang (310, 312) aufweist.

2. Raketenantrieb (100) nach Patentanspruch 1, **dadurch gekennzeichnet, dass** mittels des Gasgenerators (140) mindestens ein Lageregeltriebwerk (170) mit dampfförmigem Wasserstoffperoxid versorgbar ist.

3. Raketenantrieb (100) nach Patentanspruch 1 oder 2, **dadurch gekennzeichnet, dass** mittels der mindestens einen Turbine (150) ein elektrischer Generator (152) und/oder mindestens eine Brennstoffpumpe (P₁) und/oder eine Oxidatorpumpe (P₂) antreibbar ist.

4. Raketenantrieb (200) nach einem der Patentansprüche 1 bis 3, wobei mittels des Oxidatorstrangs (180) der zweite Tank (106) bedrückbar und mittels des Wasserdampfstrangs (182) der erste Tank (102) bedrückbar ist, **dadurch gekennzeichnet, dass** der Raketenantrieb (200) mindestens einen Behälter (202) mit einem Inertgas (210) zur zumindest ergänzenden Bedrückung des ersten und/oder zweiten Tanks (102, 106) aufweist.

5. Raketenantrieb (300) nach einem der Patentansprüche 1 bis 3, wobei mittels des Wasserdampfstrangs (182) die Elektrolyseeinheit (302) mit der Separatoreinheit (160) verbunden ist und die Elektrolyseeinheit (302) den hochenergetischen Wasserstoff- und Sauerstoffstrang (310, 312) aufweist, **dadurch gekennzeichnet, dass** dem hochenergetischen Wasserstoffstrang (310) ein erster Hochdruckspeicher (320) und dem hochenergetischen Sauerstoffstrang (312) ein zweiter Hochdruckspeicher (322) zugeordnet ist.

6. Raketenantrieb (300) nach dem Patentanspruch 5, **dadurch gekennzeichnet, dass** der erste Tank (102) mittels des hochenergetischen Wasserstoffstrangs (310) bedrückbar ist.

7. Raketenantrieb (300) nach einem der Patentansprüche 5 oder 6, **dadurch gekennzeichnet, dass** eine Hauptdüse (124) des Haupttriebwerks (120) mittels des ersten Hochdruckspeichers (320) mit Wasserstoff und mittels des zweiten Hochdruckspeichers (322) mit Sauerstoff beaufschlagbar ist.

8. Raketenantrieb (300) nach einem der Patentansprüche 5 bis 7, **dadurch gekennzeichnet, dass** mittels des ersten und des zweiten Hochdruckspeichers (320, 322) das mindestens eine Lageregeltriebwerk (170), mindestens eine Verteidigungseinheit (330) und/oder eine Hochenergieeinheit (332) versorgbar sind.

9. Raketenantrieb (300) nach einem der Patentansprüche 5 bis 8, **dadurch gekennzeichnet, dass** dem Oxidatorstrang (180) der Separatoreinheit (160) eine Sauerstoffspeichereinheit (340) und dem Wasserdampfstrang (182) der Separatoreinheit (160) eine Wasserspeichereinheit (342) zugeordnet ist.

10. Verfahren zum Betrieb eines Raketenantriebs (100, 200, 300) nach einem der Patentansprüche 1 bis 9, wobei der Brennstoff (104) über eine erste Hauptspeiseleitung (126) dem Haupttriebwerk (120) zugeführt wird und das flüssige Wasserstoffperoxid (110) aus einer zweiten Hauptspeiseleitung (128) des Haupttriebwerks (120) zumindest teilweise abgezapft und dem Gasgenerator (140) zugeführt wird.

11. Verfahren nach Patentanspruch 10, **dadurch gekennzeichnet, dass** das aus dem Gasgenerator (140) austretende dampfförmige Wasserstoffperoxid zumindest teilweise der Turbine (150) zugeführt wird.

12. Raumfahrzeug (136), **dadurch gekennzeichnet, dass** dieses mit mindestens einem Raketenantrieb (100, 200, 300) nach einem der Patentansprüche 1 bis 9 ausgestattet ist.

## Claims

1. A rocket engine (100, 200, 300) comprising a first tank (102) and a second tank (106), wherein the first tank (102) is filled with a fuel (104) and the second tank (106) is filled with an oxidant (108) such as liquid hydrogen peroxide (110) for feeding at least one main engine (120) of the rocket engine (100, 200, 300), which main engine preferably can be ignited repeatedly, wherein a gas generator (140) is assigned to the rocket engine (100, 200, 300) and designed for generating vaporous hydrogen peroxide that, after passing through at least one turbine (150), can be at least partially fed to a separator unit (160) designed for breaking down vaporous hydrogen peroxide into steam and gaseous oxygen, **characterized in that** the separator unit (160) has an oxidant line section (180) and a steam line section (182), wherein
- the second tank (106) can be pressurized by means of the oxidant line section (180) and the first tank (102) can be pressurized by means of the steam line section (182)
or
- an electrolysis unit (302) is connected to the separator unit (160) by means of the steam line section (182) and the electrolysis unit (302) has a high-energy hydrogen line section and oxygen line section (310, 312).

2. The rocket engine (100) according to claim 1, **characterized in that** at least one attitude control engine (170) can be supplied with vaporous hydrogen peroxide by means of the gas generator (140).

3. The rocket engine (100) according to claim 1 or 2, **characterized in that** an electric generator (152) and/or at least one fuel pump (P₁) and/or an oxidant pump (P₂) can be driven by means of the at least one turbine (150).

4. The rocket engine (200) according to one of claims 1 to 3, wherein the second tank (106) can be pressurized by means of the oxidant line section (180) and the first tank (102) can be pressurized by means of the steam line section (182), **characterized in that** the rocket engine (200) has at least one container (202) with an inert gas (210) for an at least supplementary pressurization of the first and/or second tank (102, 106).

5. The rocket engine (300) according to one of claims 1 to 3, wherein the electrolysis unit (302) is connected to the separator unit (160) by means of the steam line section (182) and the electrolysis unit (302) has the high-energy hydrogen line section and oxygen line section (310, 312), **characterized in that** a first high-pressure accumulator (320) is assigned to the high-energy hydrogen line section (310) and a second high-pressure accumulator (322) is assigned to the high-energy oxygen line section (312).

6. The rocket engine (300) according to claim 5, **characterized in that** the first tank (102) can be pressurized by means of the high-energy hydrogen line section (310).

7. The rocket engine (300) according to one of claims 5 or 6, **characterized in that** a main nozzle (124) of the main engine (120) can be acted upon with hydrogen by means of the first high-pressure accumulator (320) and acted upon with oxygen by means of the second high-pressure accumulator (322).

8. The rocket engine (300) according to one of claims 5 to 7, **characterized in that** at least one attitude control engine (170), at least one defense unit (330) and/or a high-energy unit (332) can be supplied by means of the first and the second high-pressure accumulator (320, 322).

9. The rocket engine (300) according to one of claims 5 to 8, **characterized in that** an oxygen storage unit (340) is assigned to the oxidant line section (180) of the separator unit (160) and a water storage unit (342) is assigned to the steam line section (182) of the separator unit (160).

10. A method for operating a rocket engine (100, 200, 300) according to one of claims 1 to 9, wherein the fuel (104) is fed to the main engine (120) by means of a first main feed line (126) and the liquid hydrogen peroxide (110) is at least partially tapped from a second main feed line (128) of the main engine (120) and fed to the gas generator (140).

11. The method according to claim 10, **characterized in that** the vaporous hydrogen peroxide exiting the gas generator (140) is at least partially fed to the turbine (150).

12. A spacecraft (136), **characterized in that** the spacecraft is equipped with at least one rocket engine (100, 200, 300) according to one of claims 1 to 9.

## Revendications

1. Propulsion de fusée (100, 200, 300) comprenant un premier réservoir (102) et un deuxième réservoir (106), le premier réservoir (102) étant rempli d'un carburant (104) et le deuxième réservoir (106) étant rempli d'un oxydant (108), tel qu'un peroxyde d'hydrogène (110) liquide, destinés à alimenter au moins un moteur principal (120) de préférence susceptible d'être allumé à répétition de la propulsion de fusée (100, 200, 300), à la propulsion de fusée (100, 200, 300) étant associé un générateur de gaz (140), qui est conçu pour générer un peroxyde d'hydrogène sous forme de vapeur, qui après avoir circulé à travers au moins une turbine (150) est susceptible d'être amené vers au moins une unité séparatrice (160), qui est conçue pour décomposer un peroxyde d'hydrogène sous forme de vapeur en vapeur d'eau et en oxygène gazeux, **caractérisée en ce que** l'unité séparatrice (160) dispose d'une ligne d'oxydant (180) et d'une ligne de vapeur d'eau (182),
- le deuxième réservoir (106) étant susceptible d'être mis sous pression au moyen de la ligne d'oxydant (180), et le premier réservoir (102) étant susceptible d'être mis sous pression au moyen de la ligne de vapeur d'eau (182),
ou
- une unité d'électrolyse (302) étant reliée au moyen de la ligne de vapeur d'eau (182) avec l'unité séparatrice (160) et l'unité d'électrolyse (302) comportant une ligne d'hydrogène et une ligne d'oxygène (310, 312) haute énergie.

2. Propulsion de fusée (100) selon la revendication 1 du brevet, **caractérisée en ce qu'**au moins un moteur de réglage (170) de position est susceptible d'être alimenté en peroxyde d'hydrogène sous forme de vapeur au moyen du générateur de gaz (140).

3. Propulsion de fusée (100) selon la revendication 1 ou 2 du brevet, **caractérisée en ce qu'**un générateur (152) électrique et / ou au moins une pompe à carburant (P₁) et / ou au moins une pompe à oxydant (P₂) est susceptible d'être entraînée au moyen de l'au moins une turbine (150).

4. Propulsion de fusée (200) selon l'une quelconque des revendications 1 à 3 du brevet, le deuxième réservoir (106) étant susceptible d'être mis sous pression au moyen de la ligne d'oxydant (180) et le premier réservoir (102) étant susceptible d'être mis sous pression au moyen de la ligne de vapeur d'eau (182), **caractérisée en ce que** la propulsion de fusée (200) comporte au moins une cuve (202) contenant un gaz inerte (210), pour la mise sous pression au moins complémentaire du premier et / ou du deuxième réservoir (102, 106).

5. Propulsion de fusée (300) selon l'une quelconque des revendications 1 à 3, l'unité d'électrolyse (302) étant reliée avec l'unité séparatrice (160) au moyen de la ligne de vapeur d'eau (182) et l'unité d'électrolyse (302) comportant la ligne d'hydrogène et la ligne d'oxygène (310, 312) haute énergie, **caractérisée en ce qu'**à la ligne d'hydrogène (310) haute énergie est associé un premier accumulateur haute pression (320) et à la ligne d'oxygène (312) haute pression est associé un deuxième accumulateur haute pression (322).

6. Propulsion de fusée (300) selon la revendication 5 du brevet, **caractérisée en ce que** le premier réservoir (102) est susceptible d'être mis sous pression au moyen de la ligne d'hydrogène (310) haute énergie.

7. Propulsion de fusée (300) selon l'une quelconque des revendications 5 ou 6 du brevet, **caractérisée en ce qu'**une buse principale (124) du moteur principal (120) est susceptible d'être soumise à de l'hydrogène au moyen du premier accumulateur haute pression (320) et d'être soumise à de l'oxygène au moyen du deuxième accumulateur haute pression (322).

8. Propulsion de fusée (300) selon l'une quelconque des revendications 5 à 7 du brevet, **caractérisée en ce que** l'au moins un moteur de réglage (170) de position, au moins une unité de défense (330) et / ou une unité haute énergie (332) sont susceptibles d'être alimentées au moyen du premier et du deuxième accumulateurs haute pression (320, 322).

9. Propulsion de fusée (300) selon l'une quelconque des revendications 5 à 8 du brevet, **caractérisée en ce qu'**une unité accumulatrice d'oxygène (340) est associée à la ligne d'oxydant (180) de l'unité séparatrice (160) et **en ce qu'**une unité accumulatrice d'eau (342) est associée à la ligne de vapeur d'eau (182) de l'unité séparatrice (160).

10. Procédé opérationnel d'une propulsion de fusée (100, 200, 300) selon l'une quelconque des revendications 1 à 9 du brevet, le carburant (104) étant amené au moteur principal (120) par l'intermédiaire d'une première conduite d'alimentation (126) principale et le peroxyde d'hydrogène (110) liquide étant soutiré au moins partiellement à partir d'une deuxième conduite d'alimentation (128) principale du moteur principal (120) et amené au générateur de gaz (140).

11. Procédé selon la revendication 10 du brevet, **caractérisé en ce que** du peroxyde d'hydrogène sortant du générateur de gaz (140) est amené au moins partiellement à la turbine (150).

12. Engin spatial (136), **caractérisé en ce que** celui-ci est équipé d'au moins une propulsion de fusée (100, 200, 300) selon l'une quelconque des revendications 1 à 9 du brevet.
